(19) Europäisches Patentamt
European Patent Office
Office européen des brevets

(11) **EP 2 579 592 A1**

(12) **EUROPEAN PATENT APPLICATION**

(43) Date of publication:
**10.04.2013 Bulletin 2013/15**

(51) Int Cl.:
*H04N 7/26* *(2006.01)*     *H04N 13/00* *(2006.01)*
*G06T 7/00* *(2006.01)*

(21) Application number: **11306282.2**

(22) Date of filing: **04.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Kerbiriou, Paul**
**35235 Thorigne Fouillard (FR)**

• **Boisson, Guillaume**
**35137 Pleumeleuc (FR)**
• **Viellard, Thierry**
**35410 Ossé (FR)**

(74) Representative: **Streit, Arend et al**
**Deutsche Thomson OHG**
**European Patent Operations**
**Karl-Wiechert-Allee 74**
**30625 Hannover (DE)**

(54) **Method and device for inter-view-predictive encoding of data of a view, device for decoding and computer-readable storage medium carrying encoded data of a view**

(57) The invention is made in the field of inter-view-predictive encoding of views. Particularly, the invention is made in the field of inter-view-predictive encoding of views in multi-view plus depth format.

The inventors' research revealed depth data useful for inter-view-predictive encoding.

Therefore a method is proposed for inter-view-predictive encoding of data of a view, wherein said method comprises using processing means for encoding blocks of the data using displacement compensated blocks of data of a different view, wherein block displacement vectors determined using blocks of depth data of the view are used for the encoding of the data.

The block displacement vectors can be used directly for displacement compensation, as predictions for residual encoding of further block displacement vectors used for displacement compensation, and/or for initializing block match searches for the further block displacement vectors.

EP 2 579 592 A1

**Description**

TECHNICAL FIELD

The invention is made in the field of inter-view-predictive encoding of views. Particularly, the invention is made in the field of inter-view-predictive encoding of views in multi-view plus depth format.

BACKGROUND OF THE INVENTION

MPEG has introduced a scheme for encoding 3D image or video content in multi-view format, where it is encoded as 2D images or 2D frames of two or more views from different viewpoints. This format is based on MPEG-4 AVC encoding standard (H.264 ITU Standard).

The main idea is to encode images of one view, the right view for stereo images, with an MPEG-4 AVC encoder. Then to encode images of other views, the prediction of blocks in P or B frames can be taken not only in the temporal suite of the current view but also from coinstantaneous frames in other views already encoded.

That is, use can be made of inter-view prediction exploiting redundancy in coincidental data of one or more different views, i.e. data associated with a same time stamp. That is, blocks of data of one view can be predicted using blocks of a different view's data at same time instances and residuals of the prediction can be encoded together with inter-view displacement vectors referencing the used blocks of the data of the different view.

In: "Multi-View Video Plus Depth Representation and Coding" IEEE International Conference on Image Processing 2007 (ICIP 2007), Sept. 16 2007-Oct. 19 2007, pages I - 201 - I - 204, Merkle, P. et al. provide a study on a video plus depth representation for multi-view video sequences. Such a 3D representation enables functionalities like 3D television and free viewpoint video in that that intermediate views can be easily rendered. Compression is based on algorithms for multi-view video coding, which exploit statistical dependencies from both temporal and inter-view reference pictures for prediction of both color and depth data.

The depth information can be represented by a depth map, a disparity map or a scaled disparity map. In the MPEG format for instance, the encoded depth information D and distance Z from the camera along the view axis have the following relation:

$$D = 255 \frac{\dfrac{1}{Z} - \dfrac{1}{Z_{far}}}{\dfrac{1}{Z_{near}} - \dfrac{1}{Z_{far}}} \qquad (1)$$

where $Z_{far}$ is the distance of a far clipping plane and $Z_{near}$ is a distance of a near clipping plane. Disparity d with respect to a camera at distance T can be retrieved using (1) and

$$d = f * T (1/Z - 1/Z_{conv}) \qquad (2)$$

where f is the focal length in pixel and $Z_{conv}$ is the distance of the convergence plane where optical axis of cameras converge. For cameras with parallel axis, *1/Zconv=0.*

Inter-view prediction can use more than one different views and can be further combined with intra-view prediction, i.e. prediction using data of images of the same view.

Compared to motion vectors, inter-view displacement vectors can by large. Therefore, displacement estimation differs from motion estimation in that it requires a larger search area. Displacement estimation is known to be either time consuming in case sufficiently large search regions are searched or prone to suboptimal results in case smaller search regions are used.

SUMMARY OF THE INVENTION

The inventors' research revealed depth data useful for inter-view-predictive encoding.

Therefore a method is proposed for inter-view-predictive encoding of data of a view according to claim 1.

Said method comprises using processing means for encoding blocks of the data using displacement compensated blocks of data of a different view, wherein block displacement vectors determined using blocks of depth data of the view are used for the encoding of the data.

Further, it is proposed a device according to claim 12 for inter-view-predictive encoding of data of a view. Said encoding device comprises processing means adapted for encoding residuals of blocks of the data using displacement compensated blocks of data of a different view, wherein block displacement vectors determined using blocks of depth data of the view are used for the encoding of the data.

Block displacement vectors determined using blocks of depth data can be used for encoding of the data in various ways.

For instance, in embodiments said method and/or said device can comprise using the block displacement vectors for displacement compensation of the blocks of data of the different view. The block displacement vectors already provide good though commonly suboptimal inter-view displacement compensation. In particular in case said blocks of data differ from said blocks of depth data such that no encoding of the block displacement vectors is required and as long as in average additional coding cost due to suboptimal predictions is compensated by coding cost saved due to not encoding inter-view displacement vectors, using block displacement vectors for displacement compensation is advantageous. Even if encoding of the block displacement vectors is required for instance since the block of data is the block of depth data, use of the block displacement vectors can be advantageous in saving computational cost for displacement vector search.

In different embodiments, said method and/or said device can comprise using the block displacement vectors for initializing block match searches for the further block displacement vectors. This saves computational cost in allowing for significantly smaller search areas in determination of inter-view displacement of blocks. In case the blocks of data encoded are said blocks of depth data, the yet different embodiments comprises encoding the further block displacement vectors without using the block displacement vectors.

In yet different embodiments, said blocks of data differ from said blocks of depth data and said method and/or said device can comprise using the block displacement vectors as predictions for residual encoding of further block displacement vectors used for displacement compensation of the blocks of data of the different view. This allows for residual encoding of the further block displacement vectors independent from other views.

Further, it is proposed a device according to claim 7 for decoding encoded data of a view interview-predictive encoded in a multi-view plus depth format. Said decoding device comprises processing means adapted for decoding residuals of blocks of the data, determining displacement compensated blocks of data of a different view, and combining the displacement compensated blocks with the residuals wherein the processing means are further adapted for using block displacement vectors determined using blocks of depth data of the view for decoding of the encoded data.

In an embodiment of the decoding device, the block displacement vectors are used for displacement compensation of the blocks of data of the different view.

In a different embodiment of the decoding device, the processing means are further adapted for decoding displacement vector residuals and combining the displacement vector residuals with the block displacement vectors for determining further displacement vectors used for displacement compensation of the blocks of data of the different view.

In a yet different embodiment of the decoding device, the processing means are adapted for using the blocks of said depth data for determining blocks of disparity values, using the disparity values for determining blocks of pixel displacement vectors, and using the blocks of pixel displacement vectors for determining the block displacement vectors.

And it is proposed a non-transitory computer-readable storage medium carrying inter-view-predictive encoded data of a view, the encoded data being inter-view predictive encoded according to one of the methods of claims 1-7.

In case depth data is represented in the MPEG format, a focal length in pixel, a inter-view distance, a convergence plane distance, a near clipping plane distance, a far clipping plane distance and the blocks of said depth data can be used for determining blocks of disparity values, the disparity values being used for determining blocks of pixel displacement vectors, the blocks of pixel displacement vectors being used for determining the block displacement vectors.

For instance, averages of the disparity values are used for determining horizontal components of the pixels displacement vectors.

EXEMPLARY EMBODIMENTS OF THE INVENTION

Exemplary embodiments of the invention are explained in more detail in the following description. The exemplary embodiments are explained only for elucidating the invention, but not for limiting the invention's disclosure or scope defined in the claims.

The invention can be realized on any computer-readable storage medium and on any electronic device comprising a processing device correspondingly adapted for decoding or encoding of 3D content. For instance, the invention may be realized in a 3D television, a 3D mobile phone, a personal computer, a 3D digital still camera, a 3D digital video camera, a 3D navigation system or a 3D car entertainment system.

A first aspect of the invention addresses the sub-problem of how to use depth data for search of inter-view displacement vectors for the prediction of visual data or depth data.

Common methods of block matching as known from motion estimation are very expensive since for useful inter-view displacement estimation a large search area is required.

In the exemplary embodiments of the first aspect described below, the depth map of the view to-be-encoded is therefore used to determine inter-view displacement vectors.

Either, inter-view displacement vectors are determined using the depth information, only. Then the inter-view displacement vectors need to be encoded/decoded, only, in case the inter-view displacement vectors are used for prediction of blocks of the depth map. In case the interview displacement vectors are not used for prediction of the blocks of the depth map, they can be determined at decoder side using the depth map alone and no further data needs to be encoded/decoded.

Commonly, initial inter-view displacement vectors determined solely from depth information offer a good though only suboptimal prediction of the block to-be-encoded. That is, it can be advantageously to perform a search in a tiny search area surrounding the position referenced or pointed at by the initial inter-view displacement vectors.

That is, the depth information is used to determine initial vectors using one or more of the pixel displacement vectors of pixels of the block. Then, the initial vectors are used for determining a search area of a block matching further refined by block matching for determining the inter-view displacement vectors. In this case at least the refinements need to be encoded.

A second aspect of the invention addresses the sub-problem of how to use depth data for encoding/decoding of interview displacement vectors.

That is, in case the inter-view displacement vectors are not used for prediction of the blocks of the depth map, they can be residual encoded/decoded using vectors determined using said depth map blocks.

This residual encoding/decoding can occur independently from whether the inter-view displacement vectors are determined by refining said vectors determined from depth map blocks or differently.

Depth maps can be considered as, or translated into a dense (per pixel) disparity (i.e. inter-view displacement) vector fields, using (1) and (2) for instance.

For a pixel (i,j) in the i-th row and the j-th column of a predicted view, disparity information d1(i,j) associated with this pixel is used for determining an associated pixel displacement vector with respect to a different reference view as (i,j $\pm$ d1(i,j)) wherein the sign of d1(i,j) depends on the arrangement of the predicted view with respect to the different reference view.

Pixel displacement vectors of given pixels of the blocks can be used as predictors of the inter-view displacement vectors, in case they are used for residual encoding, as the inter-view displacement vectors, in case they are used directly for displacement compensation, or as the initial vectors, in case they are further refined. For instance, the pixel displacement vector of a centre pixel or of a pre-determined corner pixel of the block to-be-predicted can be used.

Or, the given pixel displacement vector is combined with pixel displacement vectors of other pixels in the same block. The combination can be an average or a weighted average using a weight function. Or, the pixel displacement vectors taken into account are clustered and a vector representative of a most dominant cluster is used as block displacement vector.

The principles of the invention take advantage of the presence of the depth maps to determine and/or encode/decode inter-view displacement vectors. The encoding of residuals of displacement vectors with respect to vectors determined from depth data can occur independently from use of said vectors determined from depth data for determining the displacement vectors.


**Claims**

1. Method for inter-view-predictive encoding of data of a view in a multi-view plus depth format, said method comprising using processing means for:

   - encoding blocks of the data using displacement compensated blocks of data of a different view, wherein
   - block displacement vectors determined using blocks of depth data of the view are used for the encoding of the data.

2. Method of claim 1 wherein the block displacement vectors are used for displacement compensation of the blocks of data of the different view.

3. Method of claim 1 wherein the block displacement vectors are used as predictions for residual encoding of further block displacement vectors used for displacement compensation of the blocks of data of the different view.

**4.** Method of claim 3 wherein the block displacement vectors are further used for initializing block match searches for the further block displacement vectors.

**5.** Method of one of claims 2-4 wherein a focal length in pixel, a inter-view distance, a convergence plane distance, a near clipping plane distance, a far clipping plane distance and the blocks of disparity values the blocks of said depth data are used for determining blocks of disparity values, the disparity values being used for determining blocks of pixel displacement vectors, the blocks of pixel displacement vectors being used for determining the block displacement vectors.

**6.** Method of claim 5 wherein averages of the disparity values are used for determining horizontal components of the pixels displacement vectors.

**7.** Device for decoding encoded data of a view encoded in a multi-view plus depth format, comprising processing means adapted for:

- decoding residuals of blocks of the data,
- determining displacement compensated blocks of data of a different view, and
- combining the displacement compensated blocks with the residuals wherein the processing means are further adapted for
- using block displacement vectors determined using blocks of depth data of the view for decoding of the encoded data.

**8.** Device of claim 7, wherein the block displacement vectors are used for displacement compensation of the blocks of data of the different view.

**9.** Device of claim 7, wherein the processing means are further adapted for decoding displacement vector residuals and combining the displacement vector residuals with the block displacement vectors for determining further displacement vectors used for displacement compensation of the blocks of data of the different view.

**10.** Device of claim 7, wherein the processing means are adapted for using the blocks of said depth data for determining blocks of disparity values, using the disparity values for determining blocks of pixel displacement vectors, and using the blocks of pixel displacement vectors for determining the block displacement vectors.

**11.** Device of claim 10, the processing means further using a focal length in pixel, a inter-view distance, a convergence plane distance, a near clipping plane distance and a far clipping plane distance for determining the blocks of disparity values.

**12.** Device for inter-view-predictive encoding of data of a view in a multi-view plus depth format, the device comprising processing means adapted for

- encoding residuals of blocks of the data using displacement compensated blocks of data of a different view, wherein
- block displacement vectors determined using blocks of depth data of the view are used for the encoding of the data.

**13.** Device of claim 12 wherein the processing means are adapted for using further block displacement vectors for displacement compensation of the blocks of data of the different view, and for using the block displacement vectors as predictions for residual encoding of the further block displacement vectors.

**14.** Device of claim 13 wherein the processing means are adapted for further using the block displacement vectors for initializing block match searches for the further block displacement vectors.

**15.** Non-transitory computer-readable storage medium carrying inter-view-predictive encoded data of a view in a multi-view plus depth format, the encoded data being interview predictive encoded according to one of the methods of claims 1-7.

Europäisches
Patentamt

European
Patent Office

Office européen
des brevets

**EUROPEAN SEARCH REPORT**

Application Number

EP 11 30 6282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMIN MARTINIAN ET AL: "Extensions of H.264/AVC for Multiview Video Compression", IMAGE PROCESSING, 2006 IEEE INTERNATIONAL CONFERENCE ON, IEEE, PI, 1 October 2006 (2006-10-01), pages 2981-2984, XP031049303, ISBN: 978-1-4244-0480-3 | 1,2,7,8, 12,15 | INV. H04N7/26 H04N13/00 G06T7/00 |
| Y | * page 2982, line 1 - page 2983, right-hand column, line 16; figures 1,2 * ----- | 3-6, 9-11,13, 14 | |
| Y | B. ADIKARI ET AL: "A New Motion and Disparity Vector Prediction Technique for H.264 Based Stereoscopic Video Coding", 2006 IEEE INTERNATIONAL SYMPOSIUM ON CIRCUITS AND SYSTEMS, 1 January 2006 (2006-01-01), pages 927-930, XP55019753, DOI: 10.1109/ISCAS.2006.1692738 ISBN: 978-0-78-039389-9 * page 928, paragraph III * ----- | 3,4,9, 13,14 | |
| Y | JUNG C ET AL: "Depth-preserving DIBR based on disparity map over T-DMB", THE INSTITUTION OF ENGINEERING AND TECHNOLOGY. JOURNAL,, vol. 46, no. 9, 29 April 2010 (2010-04-29), pages 628-629, XP006035522, ISSN: 1350-911X, DOI: 10.1049/EL:20103457 * the whole document * ----- | 5,6,10, 11 | TECHNICAL FIELDS SEARCHED (IPC) H04N G06T |

-/--

The present search report has been drawn up for all claims

| Place of search | Date of completion of the search | Examiner |
|---|---|---|
| Munich | 20 February 2012 | Le Guen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 11 30 6282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FLIERL M ET AL: "Multiview Video Compression", IEEE SIGNAL PROCESSING MAGAZINE, IEEE SERVICE CENTER, PISCATAWAY, NJ, US, vol. 24, no. 6, 1 November 2007 (2007-11-01), pages 66-76, XP011197675, ISSN: 1053-5888, DOI: 10.1109/MSP.2007.905699 * page 67, left-hand column, line 1 - page 67, right-hand column, line 12; figure 1 * * page 69, left-hand column, line 10 - page 69, left-hand column, line 34 * | 1,2,7,8, 12,15 | |
| A | CHIA-WEN LIN ET AL: "Hierarchical Disparity Estimation Using Spatial Correlation", 19980602; 19980602 - 19980604, 2 June 1998 (1998-06-02), pages 130-131, XP010283179, * the whole document * | 3,4,9,13 | |
| A,D | PHILIPP MERKLE ET AL: "Multi-View Video Plus Depth Representation and Coding", IMAGE PROCESSING, 2007. ICIP 2007. IEEE INTERNATIONAL CONFERENCE ON, IEEE, PI, 1 September 2007 (2007-09-01), pages I-201, XP031157713, ISBN: 978-1-4244-1436-9 * the whole document * | 1-15 | TECHNICAL FIELDS SEARCHED (IPC) |

-/--

The present search report has been drawn up for all claims

| Place of search | Date of completion of the search | Examiner |
|---|---|---|
| Munich | 20 February 2012 | Le Guen, Benjamin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 11 30 6282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Text of ISO/IEC FDIS 23002-3 Representation of Auxiliary Video and Supplemental Information", 79. MPEG MEETING;15-1-2007 - 19-1-2007; MARRAKECH; (MOTION PICTUREEXPERT GROUP OR ISO/IEC JTC1/SC29/WG11),, no. N8768, 20 April 2007 (2007-04-20), XP030015262, ISSN: 0000-0132 * pages 17-24 * | 1-15 | |

TECHNICAL FIELDS
SEARCHED (IPC)

The present search report has been drawn up for all claims

| Place of search | Date of completion of the search | Examiner |
|---|---|---|
| Munich | 20 February 2012 | Le Guen, Benjamin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**EP 2 579 592 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MERKLE, P.** Multi-View Video Plus Depth Representation and Coding. *IEEE International Conference on Image Processing 2007 (ICIP 2007,* 16 September 2007, I - 201-I - 204